# EUROPEAN PATENT APPLICATION

(11) **EP 0 985 508 A2**
(43) Date of publication of application: **15.03.2000**
(21) Application number: 99306032.6
(22) Date of filing: 29.07.1999
(51) Int. Cl.: B29C 33/44, B29C 45/44, B29L 23/00

(54) **Mould and core for moulding undercut articles**

(30) Priority: 29.07.1998 GB 9816509
(71) Applicant: POLYPIPE PLC, Edlington, Doncaster, Yorkshire DN12 1ES (GB)
(72) Inventor: Upton, John, Nr Huddersfield, West Yorkshire HD8 8XH (GB)
(74) Representative: Jacob, Reuben Ellis

(57) **Abstract**

The invention provides mould apparatus (1), comprising an outer part (3) and a core (4), the core (4) defining in a moulding (2) a bore (5) including an undercut (6), characterised in that the core (4) comprises a first surface (18b), disposed on a first portion (7) of the core (4) a second surface (12a), and a third surface (13a) both disposed on a second portion (8) of the core (4) which together define the bore (5) and the undercut (6), the first surface (18b) further defining in use a gap in the undercut (6) through which the first surface (18b) and the second surface (12a) can be withdrawn.

## Description

The invention relates to mould apparatus and a method of moulding, in particular to apparatus and a method for injection moulding or die casting thermoformable materials such as plastics metals, and to mouldings or coatings formed thereby.

Injection moulding of thermoformable materials is widely practised to produce a variety of articles. Generally, this involves the forming of a tool which is a "negative " of the desired article, the tool having formations disposed to produce corresponding formations in the article. To produce a hollow article such as a tube, a tool must have an outer mould part and a core mould part, however this can present problems in some circumstances because removal of the core can be impeded by parts of the moulding. This problem has been addressed in the past by, for example, forming the moulding in two halves, but this has the disadvantage that the two halves must then be put together in a separate operation. One particular formation which is difficult to mould is an undercut in a cylindrical moulding such as a pipe. An undercut can be described as a narrowing in the diameter of the bore in a tube or a radially inwardly extending projection therein for example at a mouth of the tube. In the past, to form an undercut by moulding it has been necessary to use a tool having a collapsible core mould part, which can be withdrawn only in its collapsed state from the moulding through the narrowing created by the undercut. This technique is not always satisfactory because it is relatively complicated to form a collapsible core, and in particular circumstances of forming a pipe coupling with an undercut. known collapsible cores would not have sufficient depth of undercut or enough length of moulding area and they operate by moving the moulding forward and off the core rather than being withdrawn from the moulding by side mover mechanisms. making them totally unsuitable. Similar considerations apply to die-casting. which is a process used for forming articles such as pipes by forming molten metal into a mould or die and in which the formation of an undercut has been equally difficult.

It is an object of the present invention to try to mitigate problems such as this.

According to the invention there is provided mould apparatus, comprising an outer part and a core, the core defining in a moulding a bore including an undercut, characterised in that the core comprises a first surface, a second surface, and a third surface which together define the bore and the undercut, the first surface further defining in use a gap in the undercut through which the first surface and the second surface can be withdrawn.

The cylinder may be provided with a circular-section removable core, and may include a spline on a surface thereof. There may be a plurality of splines which may extend longitudinally substantially the length of the cylinder.

The first portion may have a body including a tapered part.

According to a second aspect of the invention there is provided a method for forming an injection moulding or die-casting having a bore including an undercut, comprising forming the moulding or die-casting in a mould comprising an outer mould part and a core mould part, axially moving a first portion of the core mould part from the moulding past the undercut, rotating a second portion of the core mould part into space left by the first portion, and axially withdrawing the second portion from the moulding past the undercut.

According to a third aspect of the invention there is provided an injection moulding or die-casting, when formed using apparatus as defined above. The injection moulding or die-casting may comprise a pipe coupling.

The invention will further be described by way of example with reference to the accompanying drawings, in which:
Figure 1 is a side view of a part of apparatus according to the invention;
Figure 2 is an end view of the part of Figure 1 in the direction of arrow "X";
Figure 3 is a side view of a further part of apparatus according to the invention;
Figure 4 is an end view of the part of Figure 3 in the direction of arrow "X";
Figure 5 is a longitudinal sectional view of a still further part of apparatus according to the invention;
Figure 6 is an end view of the part of Figure 5 in the direction of arrow "X";
Figure 7 is an end view of a machine for forming a moulding including apparatus according to the invention;
Figure 8 is a longitudinal sectional view of the machine of Figure 7 taken along line A-A;
Figure 9 is a longitudinal sectional view of a moulding formed using apparatus according to the invention:
Figure 10 is a further longitudinal sectional view of the moulding of Figure 9;
Figure 11 is an end view of the moulding of Figures 9 and 10;
Figure 12 is a side view of a part of a second embodiment of apparatus according to the invention:
Figure 13 is an end view of the part of Figure 12 in the direction of arrow "Y";
Figure 14 is a side view of a further part of a second embodiment of apparatus according to the invention:
Figure 15 is an end view of the part of Figure 14 in the direction of arrow "Y";
Figure 16 is a longitudinal sectional view of a still further part of a second embodiment of apparatus according to the invention:
Figure 17 is an end view of the part of Figure 16 in the direction of arrow "Y" ;
Figure 18 is a longitudinal sectional view of a machine for injection moulding including a second embodiment of apparatus according to the invention;
Figure 19 is an end view of the part of Figure 16 seen from the opposing end and shown enlarged;
Figure 20 is a side view of a portion of the part shown in Figure 16 shown enlarged;
Figure 21 is a transverse sectional view of the part shown in Figure 20;
Figure 22 is a side view of a portion of the part of Figure 14:
Figure 23 is an end view of the part shown in Figure 22 in the direction of arrow "Z";
Figure 24 is a part longitudinal sectional view in the direction of arrow "W" in Figure 23;
Figure 25 is a longitudinal sectional view of a further form of moulding formed using apparatus according to the invention:
Figure 26 is an end view of the moulding of Figure 25;
Figure 27 is a longitudinal sectional view of part of apparatus according to the invention;
Figure 28 is a longitudinal sectional view of a further part of apparatus according to the invention; and
Figure 29 is a longitudinal sectional view of still further part of apparatus according to the invention.

Referring to the drawings there is illustrated mould apparatus 1, comprising an outer part 3 and a core 4, the core 4 defining in a moulding 2 a bore 5 including an undercut 6, characterised in that the core 4 comprises a first surface 18b, a second surface 12a, and a third surface 13a which together define the bore 5 and the undercut 6, the first surface 18b further defining in use a gap in the undercut 6 through which the first surface 18b and the second surface 12a can be withdrawn.

The drawings show apparatus 1 for forming a cylindrical pipe coupling by injection moulding which includes an undercut 6. As will be appreciated however, the apparatus and method of the invention can be employed to form an undercut in a variety of injection moulded articles, and suitably modified by the use of higher temperature resistant mould parts, can be used to form articles by die-casting.

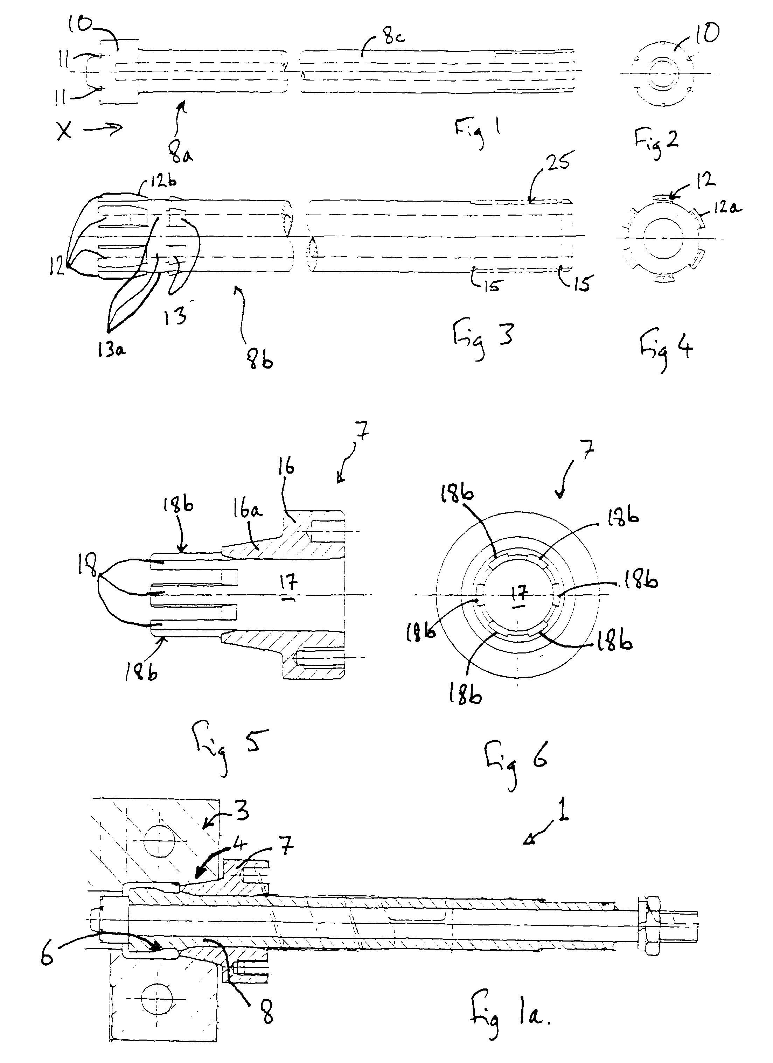

Referring in particular to Figures 1 to 6, there is illustrated a composite Core mould part 4 comprising a first portion 7 and a second portion 8, the second portion 8 comprising a rod 8a and cylinder 8b. The relationship between the mould parts in situ in an injection moulding machine 14 is illustrated in Figure 8. The rod 8a comprises an elongate, circular section body 8c, having an enlarged diameter end 10 which moulds the seating within the pipe coupling 2 for a pipe inserted therein. The enlarged end 10 has formations 11 which in the moulding 2 form pipe insertion depth stop lugs which are also used to prevent rotation of the moulding 2 during ejection from the machine 14.

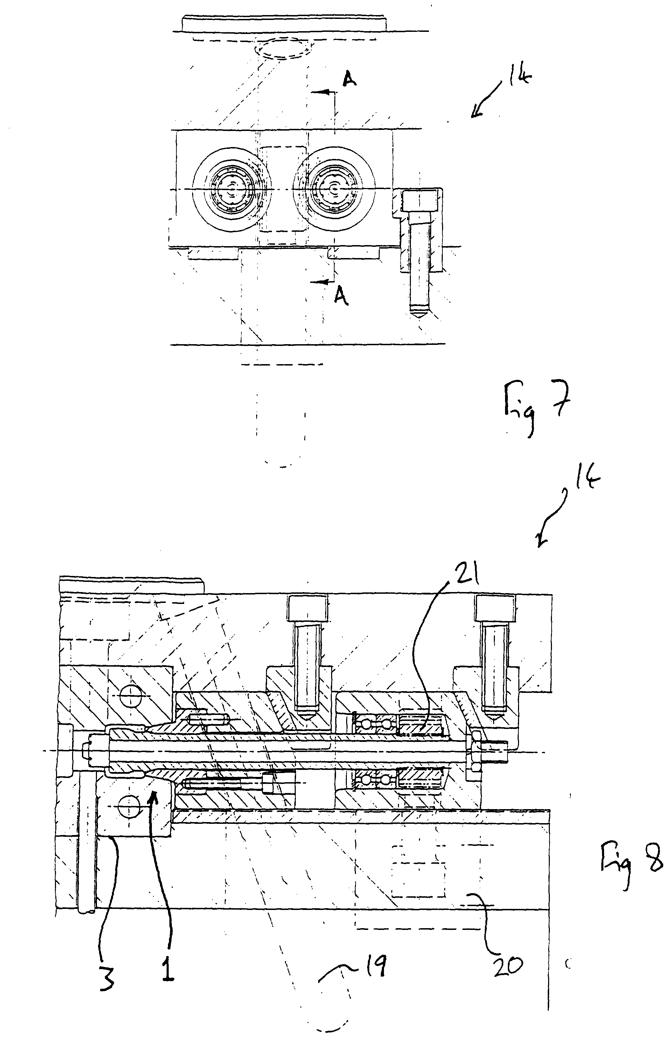

The cylinder 8b is dimensioned to accommodate the rod 8a rotatably within its bore and is provided at its proximal end with a series of first and second projections 12, 13 extending from its surface and separated by gaps 13a (Fig. 3). The first projections 12 mould a section 23 of the bore 5 of the pipe coupling 2 and thus have arcuate upper surfaces 12a (relative to the cylinder 8b) as shown in Figure 4. The first projections 12 are tapered 12b to the surface of the cylinder 8b to the gaps 13b, the gaps 13b and the tapered parts 12b forming the undercut 6 in the moulding. The second projections 13 define the end of the moulding 2. The cylinder 8b has splines 25 for rotation by a spur gear wheel and has grooves 15 for retaining rings (circlips) which are not illustrated here.

The rod 8a, when in place in the injection moulding machine 14 is fixed whilst the cylinder 8b is rotatable relative thereto, as will be described in greater detail later on.

The first portion 7 of the core mould part 4 is illustrated in Figures 5 and 6 and comprises a substantially circular cylindrical body 16 having a tapered part 16a and a through bore 17 of substantially constant diameter. The diameter of the bore 17 is dimensioned so that the cylinder 8b fits closely within it as can be seen in Figure 8. The tapered part 16a of the body 16 terminates in six axially extending fingers 18 which define a continuation of the bore 17. The fingers 18 are arranged in a circular array and have arcuate inner 18a and outer surfaces 18b, such that when the first portion 7 is placed onto the cylinder 8b, the fingers 18 interdigitate with the first and second projections 12, 13 and form a continuous circular surface which serves to mould the surface 23 of the bore 5 of the pipe coupling 2. It will be apparent that the circular surface so formed is not continuous, by virtue of the gaps 13b which form the undercut.

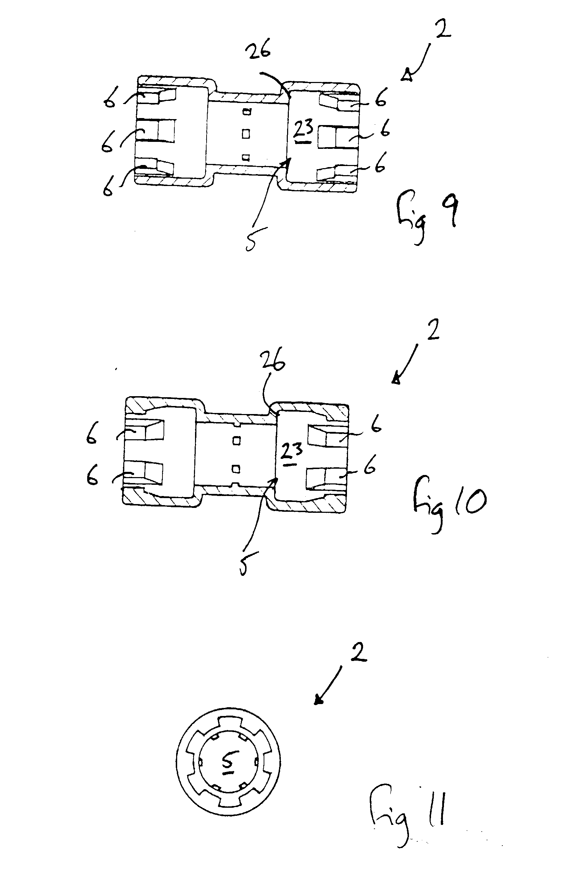

Referring to Figures 7 and 8, the apparatus 1 is illustrated in situ in an injection moulding 2 machine 14 adapted to move the parts of the apparatus 1 as required in the moulding and ejection procedure which will be described below. The machine 14 is generally of known type, and includes an angle pin 19 to facilitate lateral movements, a block hydraulic cylinder 20 to operate a rack, and a spur gear 21 operatively attached to the cylinder 8b at its distal end.

In use, the apparatus 1 is disposed within the machine 14 so that the rod 8a is fixed relative to the cylinder 8b. The outer mould part 3 defines the outer surface of the moulding 2. The cylinder 8b forms a sleeve about the rod 8a and is rotatable relative thereto by means of the splines 25 by the spur gear 21. The first portion 7 fits around the cylinder 8b as described above and illustrated in Figure 8. Once the apparatus 1 is in position in the machine 14, the injection moulding process can be performed, to form the moulding 2. This process is performed according to known techniques and will not be described in detail here.

Once the moulding 2 has been formed it is necessary to remove it from the apparatus 1 so that another can be made. As mentioned, the first projections 12, and in particular the tapered parts 12b define the undercut 6 in the moulding 2. Once formed, the undercut 6 is a barrier to withdrawal of the cylinder 8b in the axial direction which is to the right as viewed in Figure 8. The narrowing 26 which is the pipe seating in the moulding 2 prevents the cylinder 8b being removed axially in the other direction (to the left as viewed in Figure 8). Thus, to remove the cylinder 8b the first portion 7 is slid axially to the right as viewed in Figure 8, in other words away from the moulding 2, so that the fingers 18 are clear of the undercut 6. It will be appreciated that six spaces will be left in the moulding 2 where the axially extending fingers 18 have been removed, and that the spaces will extend outwardly from the moulding 2 through the undercut 6. The cylinder 8b is then rotated so that the first projections 12 are moved into the spaces left by the fingers 18. In this way the cylinder 8b can be withdrawn from the moulding past the undercut 6 through the spaces therein axially to the right as viewed in Figure 8. The moulding 2 can then be expected from the machine 14 to the left as viewed, according to normal practice.

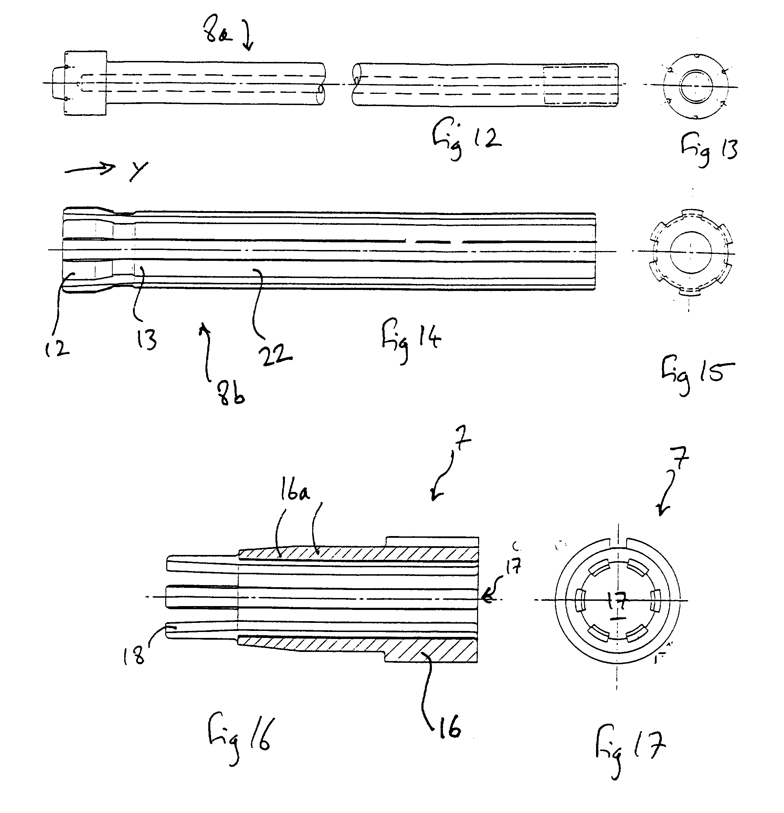

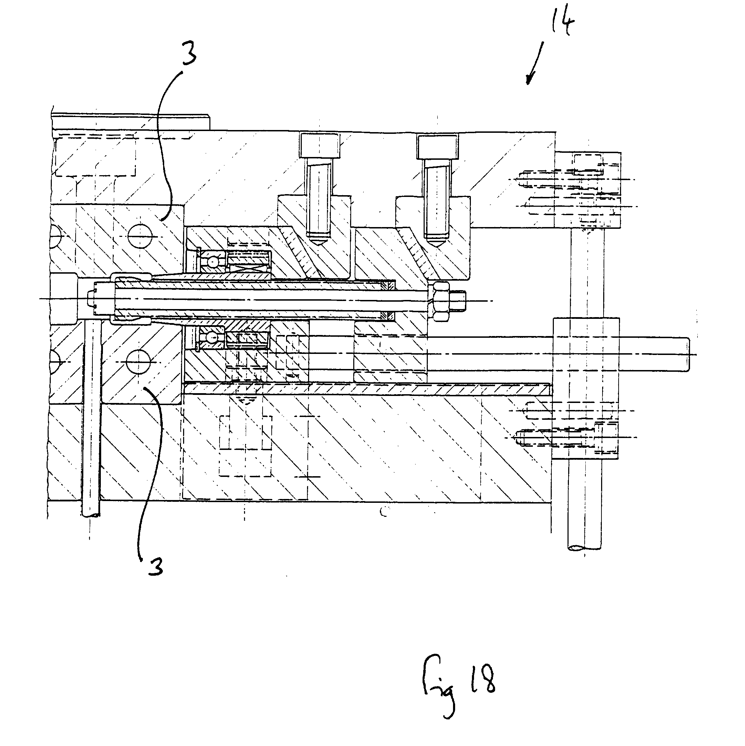

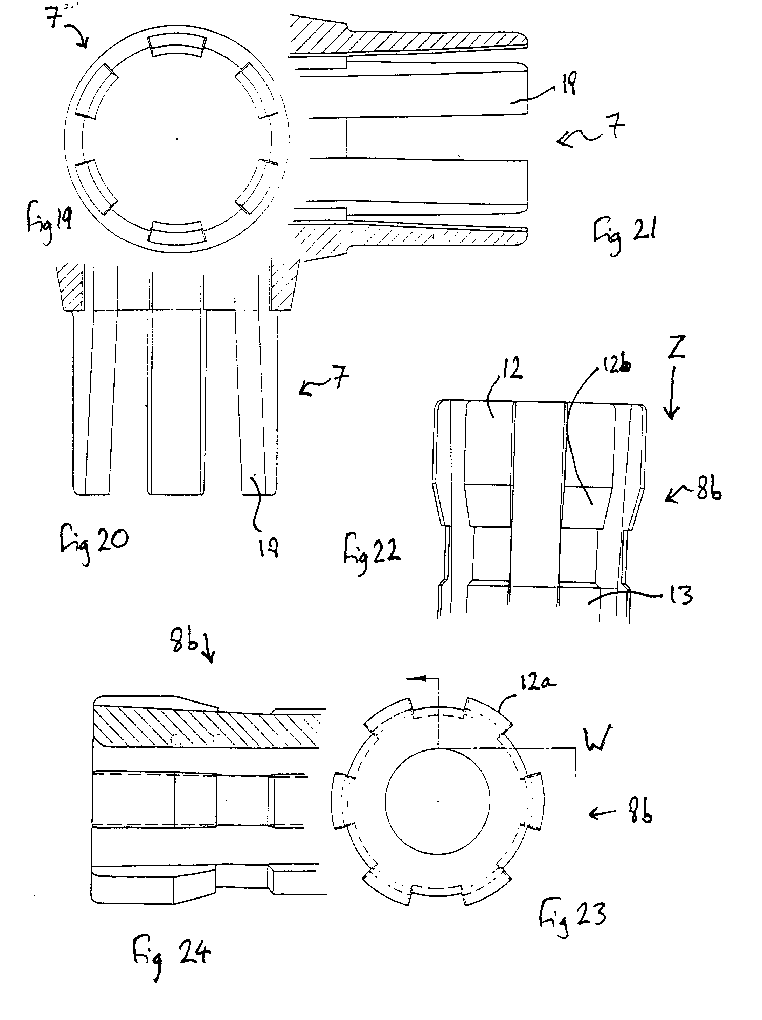

A second embodiment of the invention is illustrated in Figures 12 to 24 in which like parts are indicated by like reference numerals. As will be appreciated from the illustrations, this embodiment differs mainly in the configuration of the cylinder 8b and first portion 7. In this embodiment the cylinder 8b is provided with longitudinally extending splines 22 as extensions of the projections 13 whilst the fingers 18 of the first portion 7 extend within the bore 17, the tapered part 16a and the body 16 being longitudinally extended. When the cylinder 8b is placed within the first portion 7 the two core portions are thus splined together and can rotate together after the first portion 7 has been withdrawn axially. This arrangement obviates any danger that the core portions are damaged by accidentally rotating one relative to the other at the wrong part of the sequence of withdrawal or by not being correctly aligned when coming together. It will be appreciated that the operating sequence for this embodiment is the same as for the first embodiment described above.

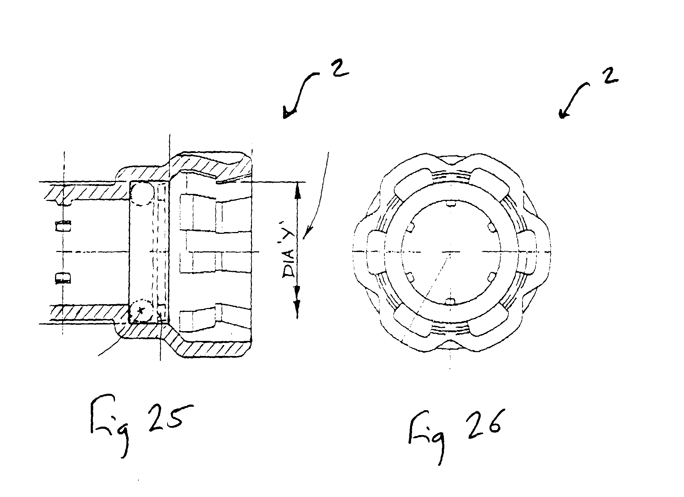

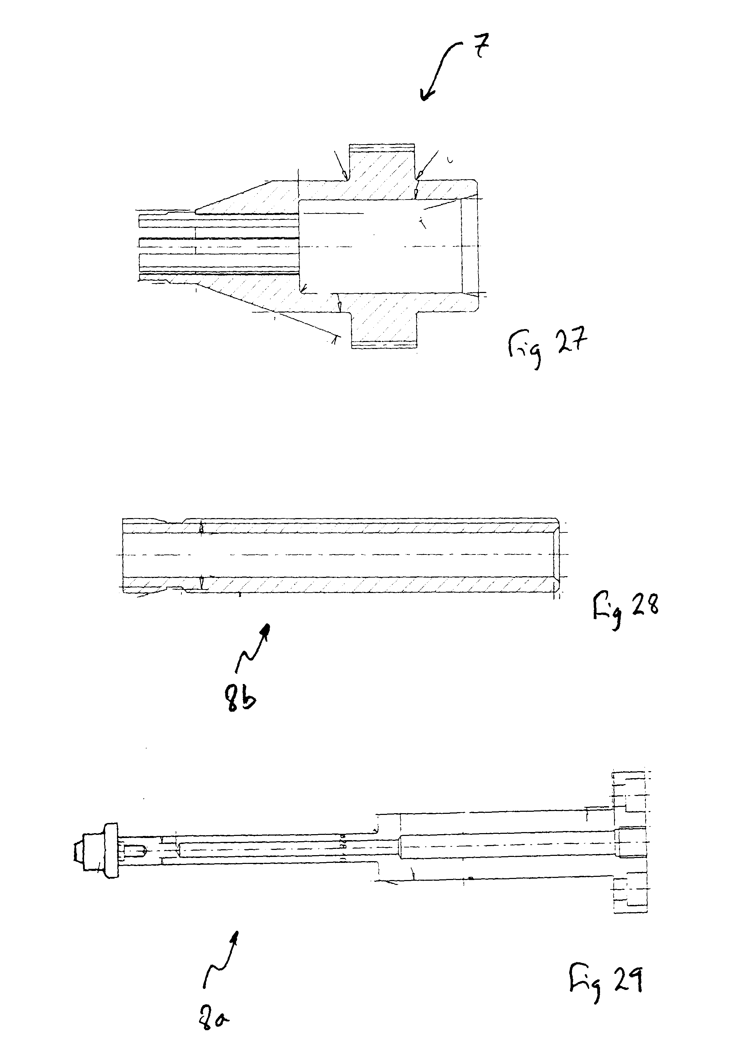

A third embodiment of the invention is illustrated in Figures 27 to 29 in which like parts are indicated by like reference numerals. This embodiment differs mainly in the general shape of the components which are adapted to suit a particular form of moulding machine. Notably, in Figure 28 a core portion 86 is shown in which the projections 12 and the splines 22 extend from the surface by the same amount. It will be appreciated that varying the shape and dimensions of the various projections of the mould parts will result in differences in the mouldings produced, see for example Figures 25 and 26, and thus different effects can be produced. The moulding of Figures 25 and 26 has wider diameter socket parts which enables the end 10 of the rod 8a to be withdrawn past the undercut after moulding. With this coupling, fittings such as "O"-rings and washers are also more easily inserted.

Thus, it can be seen that the invention provides a simple and efficient method and apparatus for the formation and ejection of an injection moulding including an undercut, in one moulding operation.

## Claims

1. Mould apparatus, comprising an outer part 3 and a core 4, the core 4 defining in a moulding 2 a bore 5 including in undercut 6, characterised in that the core 4 comprises a first surface 18b, a second surface 12a, and a third surface 13a which together define the bore 5 and the undercut 6, the first surface 18b further defining in use a gap in the undercut 6 through which the first surface 18b and the second surface 12a can be withdrawn.

2. Apparatus according to claim 1, wherein the first surface 18b is disposed on a first portion 7 of the core 4, and the second and third surfaces 12a, 13a are disposed on a second portion 8 of the core 4, the first portion being movable axially relative to the second portion 8, and the second portion being movable rotationally and axially relative to the first portion 7.

3. Apparatus according to claim 2, wherein the first surface 18b is formed on a plurality of fingers of the first portion 7, and the second surface 12a is formed on projections of the second portion 8, such that in use, the fingers and projections interdigitate to form the core 4.

4. Apparatus according to claim 2 or claim 3, wherein the second portion 8 comprises a cylinder.

5. Apparatus according to claim 4, wherein the cylinder is provided with a circular section bore for receiving a corresponding core 8a.

6. Apparatus according to claim 5, wherein the cylinder includes a spline on a surface thereof.

7. Apparatus according to claim 6, wherein the cylinder includes a plurality of splines.

8. Apparatus according to claim 7, wherein the splines extend longitudinally substantially the length of the cylinder.

9. Apparatus according to any preceding claim, wherein the first portion has a body including a tapered part.

10. A method for forming an injection moulding having a bore including an undercut, comprising forming the moulding in a mould comprising an outer mould part and a core mould part, axially moving a first portion of the core mould part from the moulding past the undercut, rotating a second portion of the core mould part into space left by the first portion, and axially withdrawing the second portion from the moulding past the undercut.

11. A method according to claim 10, carried out using apparatus according to any of claims 1 to 9.

12. An injection moulding, when formed using apparatus according to any of claims 1 to 9, or by a method according to claim 10.

13. An injection moulding according to claim 12, comprising a pipe coupling.

14. Apparatus substantially as hereinbefore described, with reference to the accompanying drawings.

15. A pipe coupling substantially as hereinbefore described, with reference to the accompanying drawings.
